Europäisches Patentamt

European Patent Office

Office européen des brevets

(11) Numéro de publication : **0 006 042**
**B1**

(12) **FASCICULE DE BREVET EUROPÉEN**

(45) Date de publication du fascicule du brevet :
**28.12.83**

(51) Int. Cl.³ : **H 01 S   3/06, G 02 B   5/14**

(21) Numéro de dépôt : **79400294.9**

(22) Date de dépôt : **10.05.79**

(54) Procédé de fabrication d'une source laser à semiconducteur.

(30) Priorité : **18.05.78 FR 7814762**

(43) Date de publication de la demande :
**12.12.79 Bulletin 79/25**

(45) Mention de la délivrance du brevet :
**28.12.83 Bulletin 83/52**

(84) Etats contractants désignés :
**DE GB IT LU NL**

(56) Documents cités :
**FR-A- 2 311 325**
**FR-A- 2 353 867**
**US-A- 4 079 404**
**APPLIED OPTICS, vol. 17, no. 2, 15 janvier 1978, New York (US), N. CHINONE et al.: "Semiconductor lasers with a thin active layer (0.1um) for optical communications", pages 311-315**
**ELECTRONICS LETTERS, vol. 11, no. 18, 4 septembre 1975, Hitchin Herts (GB), E. WEIDEL: "New coupling method for GA As-laser-fibre coupling" pages 436-437**

(73) Titulaire : **THOMSON-CSF**
**173, Boulevard Haussmann**
**F-75379 Paris Cedex 08 (FR)**

(72) Inventeur : **Duda, Eugène**
**"THOMSON-CSF" - SCPI 173, bld. Haussmann**
**F-75360 Paris Cedex 08 (FR)**
Inventeur : **Tondu, Claude**
**"THOMSON-CSF" - SCPI 173, bld. Haussmann**
**F-75360 Paris Cedex 08 (FR)**
Inventeur : **Maumy, Alain**
**"THOMSON-CSF" - SCPI 173, bld. Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Jouve, 18, rue St-Denis, 75001 Paris, France

Procédé de fabrication d'une source laser à semiconducteur

L'invention se rapporte aux sources de rayonnement laser qui mettent en œuvre une structure semiconductrice photoémissive dont deux faces clivées délimitent une cavité optique. Polarisée électriquement en sens direct, cette structure produit un rayonnement cohérent qui est émis par une pupille rectangulaire de très faibles dimensions centrée sur l'axe de la cavité optique.

Dans le cas d'une tête laser, le rayonnement émis est recueilli à l'extrémité d'une fibre optique fixée au support portant le bloc semiconducteur. Une telle disposition est décrite dans le document FR-A-2 317 786 et dans le document Applied Optics, volume 17, n° 2, 15 janvier 1978, NEW YORK (US) qui contient aux pages 311-315 un article de N. CHINONE et al. intitulé « Semiconductor lasers with a thin active layer ($> 0,1$ $\mu$m) for optical communications » et dans lequel une diode laser disposée sur un support en cuivre est alignée avec une fibre optique disposée dans une rainure en forme de V réalisée par rainurage dudit support en cuivre. Ces deux documents illustrent aussi l'utilisation d'une optique de couplage en forme de lentille cylindrique.

Pour réaliser une fixation précise, on peut utiliser un support en silicium à la surface duquel ont été aménagés par attaque chimique l'assise du bloc semiconducteur et les logements en vé destinés à recevoir la fibre optique et le cas échéant l'optique de couplage qui sert à canaliser le rayonnement. L'évacuation de la chaleur au moyen d'un support en silicium est insuffisante pour permettre un fonctionnement à puissance élevée de la source de rayonnement. De plus, cette technique est relativement onéreuse, car la confection du support en silicium intervient pour une part appréciable dans le prix d'une tête laser à fibre optique.

En vue de pallier ces inconvénients, l'invention propose de monter le bloc semiconducteur sur un support métallique réalisé dans un matériau malléable à froid et présentant une forte conductivité thermique. L'assise de ce bloc laser et les logements des fibres optiques sont réalisés en une seule opération par poinçonnage de la surface du support métallique.

L'invention a pour objet un procédé de fabrication d'un support d'une source laser à semiconducteur en métal malléable à froid et de forte conductivité thermique sur lequel reposent un bloc laser et au moins une fibre optique alignée pour recueillir le rayonnement produit par ledit bloc laser ; ledit bloc ayant une assise sur ledit support et ladite fibre optique étant logée dans une rainure pratiquée dans ledit support, caractérisé en ce qu'il consiste à mettre en œuvre un outil de matriçage dont la tête de grande dureté est une contre-empreinte des formes en alignement de ladite assise et de ladite rainure et à produire avec cet outil en une seule opération l'écrasement dudit métal selon une face vierge dudit support afin d'obtenir simultanément l'empreinte permanente en creux constituant ladite assise et ladite rainure.

L'invention sera mieux comprise au moyen de la description qui va suivre et des figures annexées parmi lesquelles :

la figure 1 est une vue isométrique d'une source laser à semiconducteur ;

la figure 2 est une vue isométrique d'une matrice symétrique permettant le matriçage de supports pour sources laser ;

la figure 3 est une vue en plan du support après matriçage et avant découpe ;

la figure 4 est une vue isométrique d'une variante de réalisation d'un support pour tête laser et des éléments optiques qu'il permet de positionner ;

la figure 5 illustre les étapes successives de la réalisation d'une matrice ;

la figure 6 illustre un détail de réalisation d'un support matricé.

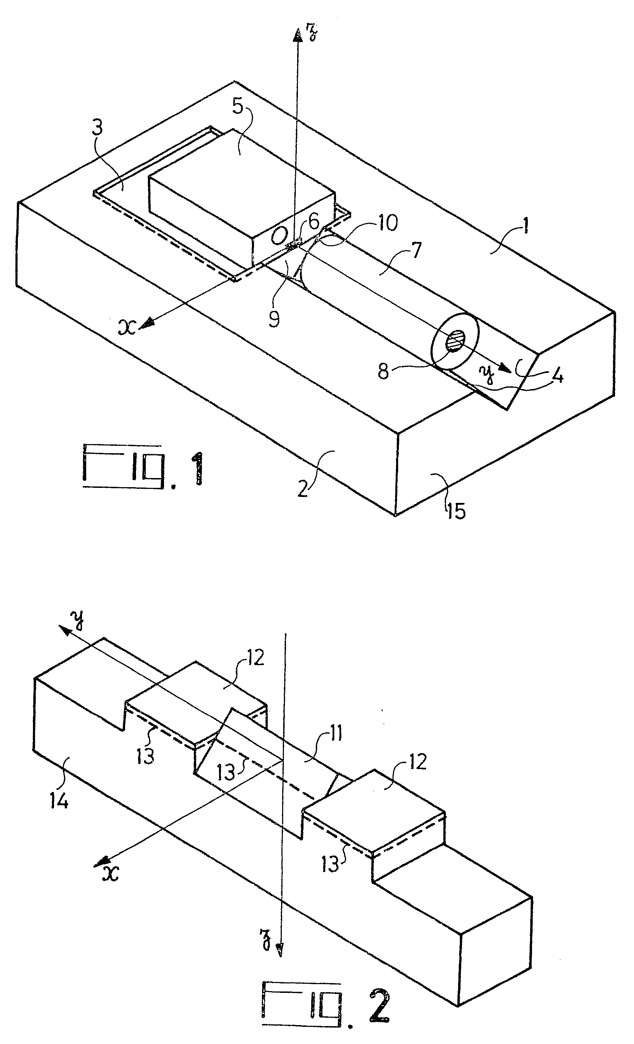

Sur la figure 1, on peut voir un support 2 à la surface 1 duquel on a formé une empreinte composée d'une aire aplanie 3 servant d'assise à un bloc laser 5 et d'une rainure en Vé servant de logement à une fibre optique 7, 8. Le bloc laser 5 est issu de la fabrication collective d'une structure à semiconducteur capable d'émettre un rayonnement optique lorsqu'elle est parcourue en sens direct par un courant électrique. Les faces du bloc 5 parallèles au plan xoy sont clivées et font office de miroirs délimitant une cavité optique d'axe oy. L'émission laser du bloc 5 a lieu par une pupille 6 de faibles dimensions dont le centre 0 est sur l'axe oy. Pour obtenir un bon transfert d'énergie rayonnée, l'âme 8 de la fibre optique doit être centrée et alignée selon l'axe oy ; la gaine 7 de la fibre optique et la rainure 4 sont donc dimensionnées en conséquence, en tenant compte de la position de l'assise 3 et de la distance qui sépare le centre 0 de la pupille 6 de la face d'appui du bloc laser 5. L'extrémité 10 de la fibre optique 7, 8 est taillée et positionnée de telle façon que l'énergie du faisceau divergent émis par la pupille 6 puisse se propager dans l'âme de la fibre. A cet effet, le rebord 9 et la forme en cuvette de l'assise 3 permettent de bien positionner en x et en y le bloc 5 et la fibre 7, 8. Le positionnement en z du bloc laser 5 et de la fibre optique 7, 8 est assuré en réalisant en une seule opération de matriçage l'empreinte 3, 4. A cet effet, le support 2 est confectionné dans un métal malléable à froid et l'empreinte 3, 4 est obtenue au moyen d'un outil de matriçage muni à son extrémité d'une matrice de grande dureté telle que représentée sur la figure 2.

La matrice 14 est constituée par exemple par un bloc d'acier trempé dont la partie supérieure est usinée symétriquement par rapport à la direction z qui est celle suivant laquelle est appliqué l'effort de matriçage. Pour obtenir cette symétrie qui évite que l'outil ne porte à faux lors de l'opération de report d'empreinte, on façonne simultanément deux supports à partir d'une ébauche de métal ayant deux fois la longueur nécessaire. Après matriçage, les deux supports sont séparés par une découpe effectuée selon la face 15 de la figure 1.

L'empreinte de la figure 1 est obtenue au moyen de la matrice 14 par usinage d'un Vé 11 deux fois plus long que la rainure désirée. Le dièdre formé par les faces du Vé 11 peut avoir par exemple un angle d'ouverture de 70 à 120°. Le Vé 11 est encadré symétriquement par deux portées coplanaires 12. La ligne pointillée 13 représente, fortement exagérée, la profondeur de pénétration atteinte au cours du matriçage. La force de matriçage est suffisante lorsque les deux portées 12 ont aplani les irrégularités de surface du support, mais on peut l'accroître pour obtenir un léger rebord permettant le positionnement en x et en y du bloc laser 5. A titre d'exemple non limitatif, avec un support en cuivre une empreinte de 7 mm$^2$ peut être obtenue avec un effort de matriçage de l'ordre de 30 kg.

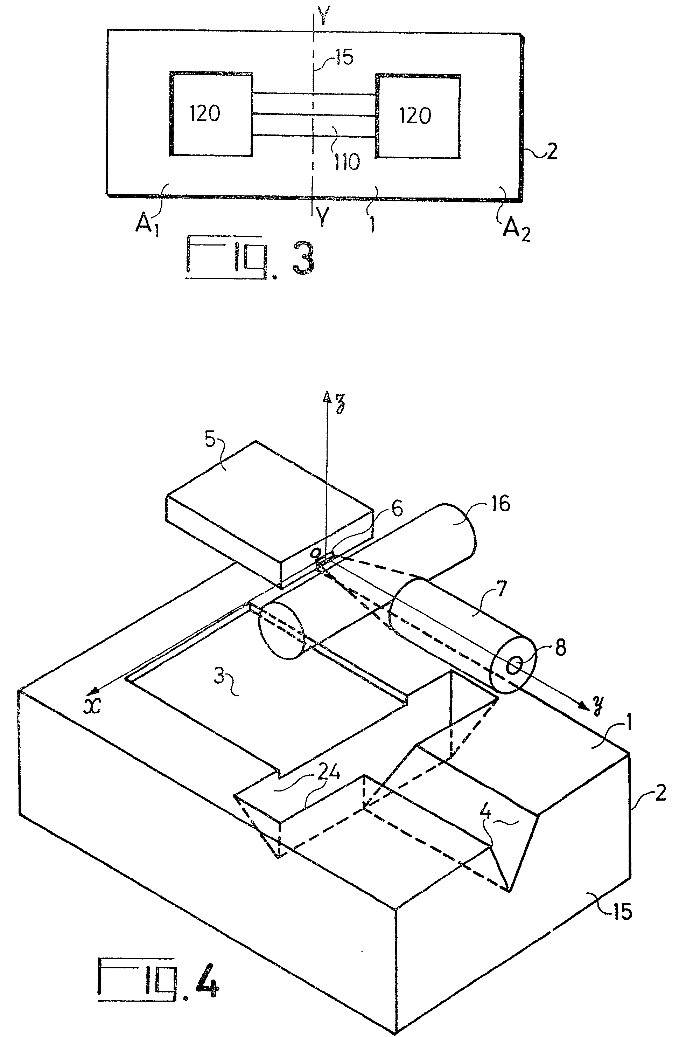

Sur la figure 3, on peut voir l'empreinte obtenue avant découpage suivant YY des supports $A_1$ et $A_2$ ; l'ébauche 2 porte à sa surface 1 deux cuvettes 120 reliées par une rainure 110. On peut également prévoir une rainure 110 qui se prolonge de part et d'autre des cuvettes 120. Cette variante permet d'utiliser les rayonnements émis par les deux faces de la cavité optique du bloc laser 5. Dans ce cas, deux fibres optiques sont montées sur le support, l'une servant par exemple de boucle de contre-réaction optique. Sans s'écarter du domaine de l'invention, on peut réaliser la matrice de la figure 2 en prévoyant une seule portée 12 encadrée par deux Vés 11 ou encore en remplaçant le Vé central par deux Vés qui encadrent les deux portées 12 de la matrice 14.

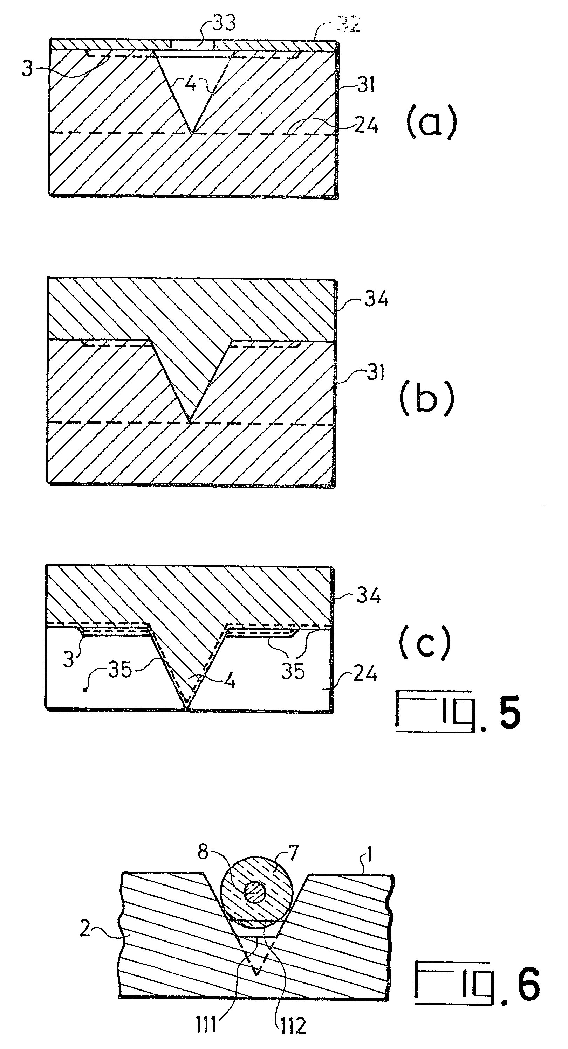

Sur la figure 4, on peut voir une autre variante de réalisation de la source laser selon l'invention. Elle diffère de la variante représentée sur la figure 1 par la présence d'une fibre 16 et d'un logement 24 intercalés entre l'assise 3 et la rainure 4. Le rôle de la fibre 16 est de faire converger le rayonnement émis par la pupille 6, afin de recueillir le plus possible d'énergie dans l'âme 8 de la fibre optique 7, 8. La fibre 16 qui fait office de lentille cylindrique réalise une anamorphose de la section du faisceau rayonné.

La réalisation d'une matrice capable de reporter en une seule opération l'empreinte 3, 24, 4 pose des problèmes s'il s'agit d'un usinage classique. On peut cependant réaliser une telle matrice à partir d'un support de moulage en silicium qui reproduit l'empreinte en creux visible sur la figure 4. Le cristal de silicium est taillé suivant une coupe (1,0,0). On effectue un masquage de la surface du bloc de silicium 31 comme le montre en (a) la figure 5. Le masque 32 comporte des fenêtres rectangulaires 33 dont les bords sont orientés suivant des directions de l'ensemble (1, 1,0) ; des fenêtres correspondent aux différentes parties de l'empreinte à confectionner. Une attaque chimique du silicium provoque un creusement selon un profil en Vé ou trapézoïdal qui matérialise la cuvette 3 et les rainures 4 et 24. On voit en (b) sur la figure 5 le support de moulage 31 débarrassé de son masque 32 et recouvert par un dépôt de fer électrolytique 34. Après décollement du support 31, le dépôt électrolytique 34 subit une opération de nitruration destinée à durcir les faces actives 35 de la contre-empreinte.

La figure 5 représente en (c) la matrice nitrurée prête à l'emploi.

Comme le montre la figure 6, le profil d'une rainure peut être trapézoïdal avec des fonds 111 ou 112 séparés par un pan vertical servant de butée pour le positionnement de la fibre 7, 8. L'attaque chimique donnant naissance au moule de silicium fournit une assise parfaitement plane pour le bloc laser 5 et des flancs également inclinés pour la fibre optique 7, 8.

En ce qui concerne les matériaux qui conviennent le mieux pour confectionner le support, on peut citer dans l'ordre décroissant de malléabilité l'or, l'argent, l'aluminium et le cuivre. Ces métaux présentent la bonne conductivité nécessaire à l'évacuation de la chaleur dégagée par le bloc laser.

La technique qui vient d'être décrite assure sans difficulté une précision de positionnement laser-fibre de l'ordre du micron et un prix de revient particulièrement avantageux. La fonction de dissipateur thermique assurée par le support métallique permet de réaliser des sources laser de puissance sensiblement plus élevée que celles qui sont construites à partir d'un support en silicium. L'état de surface et l'usinage préalable de l'ébauche métallique ne sont nullement critiques puisque le matriçage établit d'un seul coup l'ensemble des conditions requises pour un positionnement précis.

## Revendications

1. Procédé de fabrication d'un support (2) d'une source laser à semiconducteur en métal malléable à froid et de forte conductivité thermique sur lequel reposent un bloc laser (5) et au moins une fibre optique (7) alignée pour recueillir le rayonnement produit par ledit bloc laser (5) ; ledit bloc (5) ayant une assise (3) sur ledit support et ladite fibre optique étant logée dans une rainure (4) pratiquée dans ledit support (2), caractérisé en ce qu'il consiste à mettre en œuvre un outil de matriçage (14) dont la tête de grande dureté est une contre-empreinte des formes en alignement de ladite assise (3) et de ladite rainure (4) et à produire avec cet outil en une seule opération l'écrasement dudit métal selon une face vierge (1) dudit support (2) afin d'obtenir simultanément l'empreinte permanente en creux constituant ladite assise (3) et ladite rainure (4).

2. Procédé selon la revendication 1, caractérisé en ce que la contre-empreinte est symétrique par rapport à la direction d'action (z) de la force de matriçage.

3. Procédé selon la revendication 2, caractérisé en ce que le support (2) est partagé en deux parties après matriçage, afin de confectionner deux sources laser distinctes.

4. Procédé selon l'une quelconque des revendications 1 à 3, caractérisé en ce que le matriçage est réalisé au moyen d'un outil (14) dont la tête est constituée par un agencement de portées coplanaires (12) et par des couteaux en Vé (11) dont la crête dépasse le plan des portées.

5. Procédé selon la revendication 1, caractérisé en ce que l'empreinte comporte au moins deux rainures (4, 24) ; l'une des rainures (4) étant séparée de l'assise (3) par l'autre rainure (24) où est logée une fibre (16) faisant office de lentille cylindrique.

6. Procédé suivant l'une quelconque des revendications 1 à 5, caractérisé en ce que chaque rainure (4, 24) a un profil triangulaire ou trapézoïdal ouvert vers l'extérieur du support (2).

7. Procédé selon l'une quelconque des revendications 1 à 6, caractérisé en ce que le métal est choisi dans le groupe comprenant l'or, l'argent, l'aluminium et le cuivre.

## Claims

1. Manufacturing process of a support (2) of a semiconductor laser source made of a cold-working metal of high thermal conductivity on which rests a laser block (5) and at least one optic fibre (7) aligned to receive the radiation produced by the said laser block (5) ; the said block (5) having a seating (3) on the said support and the said optic fibre being housed in a groove (4) provided in the said support (2), characterized in that it consists in operating a metal stamping tool (14) the extreme hardness head of which is a counter-print of the shapes in alignment of the said seating (3) and the said groove (4) and to produce with this tool in a single operation the crushing of the said metal along a blank face (1) of the said support (2) in order to obtain simultaneously the permanent print in the hollow constituting the said seating (3) and the said groove (4).

2. Process according to claim 1, characterized in that the counter print is symetrical with respect to the direction of action (z) of the stamping force.

3. Process according to claim 2, characterized in that the support (2) is shared into two parts after stamping, in order to produce two distinct laser sources.

4. Process according to any one of claims 1 to 3, characterized in that the stamping is realized by means of a tool (14) the head of which is constituted by a disposition of coplanar bosses (12) and by V-arranged knives the ridge of which exceeds beyond the plane of the bosses.

5. Process according to claim 1, characterized in that the print comprises at least two grooves (4, 24) ; one of the grooves (4) being separated from the seating (3) by the other groove (24) in which is housed a fibre (16) acting as a cylindrical lens.

6. Process according to any one of claims 1 to 5, characterized in that each groove (4, 24) has a triangular or trapezoidal outline open towards the outside of the support (2).

7. Process according to any one of claims 1 to 6, characterized in that the metal is selected from the group comprising gold, silver, aluminium and copper.

## Ansprüche

1. Verfahren zur Herstellung eines Sockels (2) für eine Halbleiterlaserquelle aus kaltverformbarem Metall von hoher thermischer Leitfähigkeit, auf dem ein Laserblock (5) und mindestens ein zwecks Aufnahme der durch den Laserblock (5) erzeugten Strahlung ausgerichteter Lichtleiter (7) angeordnet sind, wobei der Block (5) eine Lagerung (3) auf dem Sockel besitzt und der Lichtleiter in einer in dem Sockel (2) angeordneten Auskehlung (4) untergebracht ist, dadurch gekennzeichnet, dass man ein Prägewerkzeug (14) verwendet, dessen sehr harter Kopf ein den Formen der aufeinander ausgerichteten Lagerung (3) und Auskehlung (4) entsprechenden Prägestempel bildet, und dass man mit diesem Werkzeug in einem einzigen Arbeitsgang das Metall längs einer unberührten Fläche (1) des Sockels (2) verformt, um gleichzeitig die dauerhafte Prägung zu erhalten, welche die besagte Lagerung (3) und die besagte Auskehlung (4) bildet.

2. Verfahren nach Anspruch 1, dadurch gekennzeichnet, dass der Stempel in bezug auf die Wirkungsrichtung (z) der Prägekraft symmetrisch ist.

3. Verfahren nach Anspruch 2, dadurch gekennzeichnet, dass der Sockel (2) nach der Prägung in zwei Teile getrennt wird, um zwei verschiedene Laserquellen zu bilden.

4. Verfahren nach einem der Ansprüche 1 bis 3, dadurch gekennzeichnet, dass die Prägung mittels eines Werkzeugs (14) erfolgt, dessen Kopfteil durch eine Anordnung von koplanaren Stützflächen (12) und durch V-förmige Keile (11) gebildet ist, deren Scheitel über die Ebene der Stützflächen hinausragt.

5. Verfahren nach Anspruch 1, dadurch gekennzeichnet, dass das geprägte Stück mindestens zwei Auskehlungen (4, 24) enthält, wobei eine der Auskehlungen (4) von der Lagerung (3) durch die andere Auskehlung (24) getrennt ist, in welcher ein als zylinderförmige Linse wirkender Lichtleiter (16) angeordnet ist.

6. Verfahren nach einem der Ansprüche 1 bis 5, dadurch gekennzeichnet, dass jede Auskehlung (4, 24) eine dreiecksförmige oder trapezförmige, nach der Aussenfläche des Sockels (2) zu offene Form besitzt.

7. Verfahren nach einem der Ansprüche 1 bis 6, dadurch gekennzeichnet, dass das Metall aus der Gold, Silber, Aluminium und Kupfer umfassenden Gruppe ausgewählt ist.

Fig. 1

Fig. 2

Fig. 3

Fig. 4

(a)

(b)

(c)

Fig. 5

Fig. 6